# NEUE EUROPÄISCHE PATENTSCHRIFT

(11) **EP 0 705 186 B2**
(45) Veröffentlichungstag und Bekanntmachung des Hinweises auf die Entscheidung über den Einspruch: **11.09.2002**
(45) Hinweis auf die Patenterteilung: 12.03.1997
(21) Anmeldenummer: 94918290.1
(22) Anmeldetag: 18.06.1994
(51) Int. Cl.: B60S 1/08

(54) **EINRICHTUNG ZUR STEUERUNG EINER SCHEIBENWISCHANLAGE**
DEVICE FOR CONTROLLING A WINDSCREEN-WASHER INSTALLATION
DISPOSITIF DE COMMANDE D'UN SYSTEME D'ESSUIE-GLACE

(30) Priorität: 02.07.1993 DE 9309837 U; 03.02.1994 DE 4403221; 06.04.1994 DE 4411772
(43) Veröffentlichungstag der Anmeldung: 10.04.1996
(73) Patentinhaber: Reime, Gerd, 75328 Schömberg (DE)
(72) Erfinder: Reime, Gerd, 75328 Schömberg (DE)
(74) Vertreter: Reinhardt, Harry
(86) Internationale Anmeldenummer: DE9400710
(87) Internationale Veröffentlichungsnummer: WO95001270

(56) Entgegenhaltungen:
- EP-A- 0 438 633
- EP-A- 0 547 337
- EP-A2- 0 102 622
- WO-A-91/09756
- WO-A1-90/03903
- WO-A1-95/21078
- WO-A2-90/08680
- DE-A- 3 941 905
- DE-A1- 2 630 470
- DE-A1- 3 314 770
- DE-A1- 4 141 348
- DE-C2- 3 902 231
- DE-U- 9 309 837
- US-A- 216 341
- US-A- 4 495 452
- US-A- 4 867 561
- US-A- 4 916 374
- US-A- 5 057 754

## Beschreibung

### GEBIET DER ERFINDUNG

Die Erfindung betrifft eine Einrichtung zur Steuerung einer Scheibenwischanlage nach dem Oberbegriff des Anspruches 1.

### STAND DER TECHNIK

Eine derartige Einrichtung ist aus der US-A 5,057,754 bekannt. Als Sensorvorrichtung werden Widerstandsstreifen eingesetzt, wobei bei jedem Wischzyklus gezählt wird, wieviele dieser Widerstandsstreifen durch eine Benetzung kurzgeschlossen sind. In Abhängigkeit vom Zählergebnis je Wischzyklus wird der Wischer im Intervall- oder im Dauerbetrieb gesteuert. Sobald sich die Wischblätter jedoch über der Sensorvorrichtung bewegen und insbesondere dann, wenn sie zu diesem Zeitpunkt Wasser vor sich herschieben, kommt es zu einem Kurzschluß aller benachbarten Sensorstreifen. Aus diesem Grund wird dort als Mittel zur Erkennung der beim Überwischen des Wischers über die Sensorfläche entstehenden Signale ein zusätzlicher Positionssensor vorgesehen. Es wird vorgeschlagen, die Abfragerate während dieses Zeitraums, in dem der Wischer den Sensor überstreicht, so zu verlangsamen, daß es gar nicht zu einem Zählen dieser Signale kommen kann. Insofern ist hier stets ein zusätzlicher Sensor erforderlich.

Bei einer Einrichtung gemäß DE-A 41 41 348 versucht man, die infolge einer optoelektronischen Sensorvorrichtung ermittelten Signale der Steuerung einer Scheibenwischanlage zugänglich zu machen. Da für eine zuverlässige Reinigung der Scheibe eine Wischvorrichtung erforderlich ist, kommt es infolge des Überstreichens der Sensorvorrichtung durch den Scheibenwischer zu Signalen, die die Steuersignale für den Scheibenwischermotor verfälschen. Zur Beeinflussung des Antriebsmotors werden nur die Signale verwendet, die kurz nach dem letzten Überwischvorgang bis zum Einleiten eines neuen Wischzyklus, also nicht während des Überwischens, von der Sensorvorrichtung erzeugt werden. Eine Benetzung verringert allmählich das ständig anstehende Signal, bis ein dem Zustand der Scheibe entsprechender Referenzwert unterschritten wird, was zum Auslösen des Wischers führt Der Referenzwert wird ständig neu ermittelt, um die durch eine Benetzung hervorgerufenen Signale aus dem hohem Störpegel herauszufiltern. Einzelne Tropfen können größenmäßig nicht erfaßt werden.

Aus der DE-A 39 41 905 ist eine Vorrichtung bekannt, bei der als Sensorvorrichtung eine Lichtschranke eingesetzt wird. Diese Lichtschranke wird von einem Überwischen durch den Wischer nicht beeinflußt, so daß allein vom Wischer selbst keine Signale ausgehen. Die auftretenden Signale werden qualitativ dahingehend beurteilt, ob sie während des eigentlichen Wischvorgangs, also während der Bewegung des Wischers auftreten, oder zu einem Zeitpunkt auftreten, zu dem sich der Wischer im Ruhezustand befindet. Um ein zu spätes oder zu frühes Reagieren des Wischers zu vermeiden, werden dann die während des eigentlichen Wischvorgangs aufsummierten Signale mit einem Faktor 1 multipliziert, der dem Wischvorgang Rechnung trägt. Erreichen die nach ihrer Impulsbreite aufsummierten Signale einen Schwellwert, so wird ein Wischvorgang eingeleitet und der aufsummierte Wert auf einen Ausgangswert rückgestellt. Wenngleich das Problem von Signalen, die durch ein Überwischen des Wischers selbst hervorgerufen werden, hier nicht auftritt, so hat diese Vorrichtung doch den Nachteil, daß Regentropfen nicht größenmäßig erfaßt werden können und die Lichtschranke gegen Verschmutzung anfälliger ist, da ihr 'Sichtkreis' nicht vom Wischer mitgereinigt wird.

Darüberhinaus ist ein programmierbarer Intervallschalter bekannt, bei dem der Fahrer in Abhängigkeit seiner durch die Benetzung hervorgerufenenen Sichtbehinderung den Intervallschalter betätigt. Gemessen wird die Zeit zwischen zwei Betätigungen, die in der Folge als Intervallzeit herangezogen wird.

### OFFENBARUNG DER ERFINDUNG

Ausgehend von diesem Stand der Technik liegt der vorliegenden Erfindung die Aufgabe zugrunde, eine einfache und kostengünstige Anordnung zur Verwertung der ermittelten Signale zur Steuerung einer Scheibenwischanlage zu schaffen.

Diese Aufgabe wird eine Einrichtung mit den Merkmalen des Anspruches 1 gelöst.

In DE-GM 93 09 837 wird eine optoelektronische Sensorvorrichtung beschrieben, bei der mehrere Meßstrecken getaktet beaufschlagt werden und die dabei ermittelten getakteten Signale über eine nachgeschaltete Auswertevorrichtung in Abhängigkeit einer Zeitkonstante ausgeregelt werden. Dadurch ist es einerseits möglich, äußere Einflüsse, wie eine sich der Strahlung der Anordnung überlagernde Fremdstrahlung zu eliminieren, so daß sich lediglich von der Benetzung abhängige Signale ergeben. Da dadurch aber auch der Störpegel bei den Eingangssignalen keine Rolle mehr spielt, ist deutlich jeder Belag und jede Benetzung sogar analog zur Tropfengröße und -menge den Signalen zuzuordnen. Dadurch kann das Signal selbst analog zur Benetzung zur Steuerung des Scheibenwischers herangezogen werden. Statt eines Zeitfensters, wie es aus dem Stand der Technik zum Ausblenden der vom Scheibenwischer hervorgerufenen Signale erforderlich ist, können über den gesamten Zeitraum hinweg die eingehenden Signale ausgewertet werden. Es ist nicht erforderlich, die eingehenden Eingangssignale der Amplitude nach auszuwerten, es genügt lediglich, die Anzahl der Signale bzw. der eintreffenden Tropfen zu zählen. Das Überwischen, das ebenfalls Signale erzeugt, wird ganz einfach dadurch berücksichtigt, daß Signale zur Steuerung des Scheibenwischermotors erst dann gegeben werden, wenn die Anzahl der Signale größer ist als die mit Sicherheit vom Überstreichen hervorgerufenen Signale der Sensorvorrichtung. Die Zählanordnung zählt dabei jeden Puls, so daß mit Sicherheit einer Benetzung zuzurechnende Signale einen Wischvorgang auslösen.

### KURZBESCHREIBUNG DER FIGUREN

Im folgenden wird die Erfindung an einem Ausführungsbeispiel anhand der beigefügten Zeichnungen erläutert. Es zeigen:
- Fig. 1: eine schematische Schaltungsanordnung der Einrichtung zur Steuerung einer Scheibenwischanlage,
- Fig. 2a,2b,2c: Diagramme des Motorsignals, des Eingangssignals und der Zählerstellung über die Zeit,
- Fig. 3a,3b: Diagramme des Motorsignals und der Empfindlichkeit über die Zeit,
- Fig. 4: ein Diagramm der Empfindlichkeit über die Zeit bei tᵥ=0,
- Fig. 5: ein Diagramm der Eingangssignale über die Zeit,
- Fig. 6-8: Diagramme, bei denen der Wert eines Eingangssignals über die Zeit aufgetragen ist, bei Auftreffen eines Insekts, bei Auftreffen eines Wassertropfens und bei Auftreten eines im Wind bewegten Wassertropfens,
- Fig. 9: einen Ablaufplan für die Arbeit mit einem Hintergrundspeicher,
- Fig. 10: ein Blockschaltbild der Sensorvorrichtung.

### BESCHREIBUNG BEVORZUGTER AUSFÜHRUNGSBEISPIELE

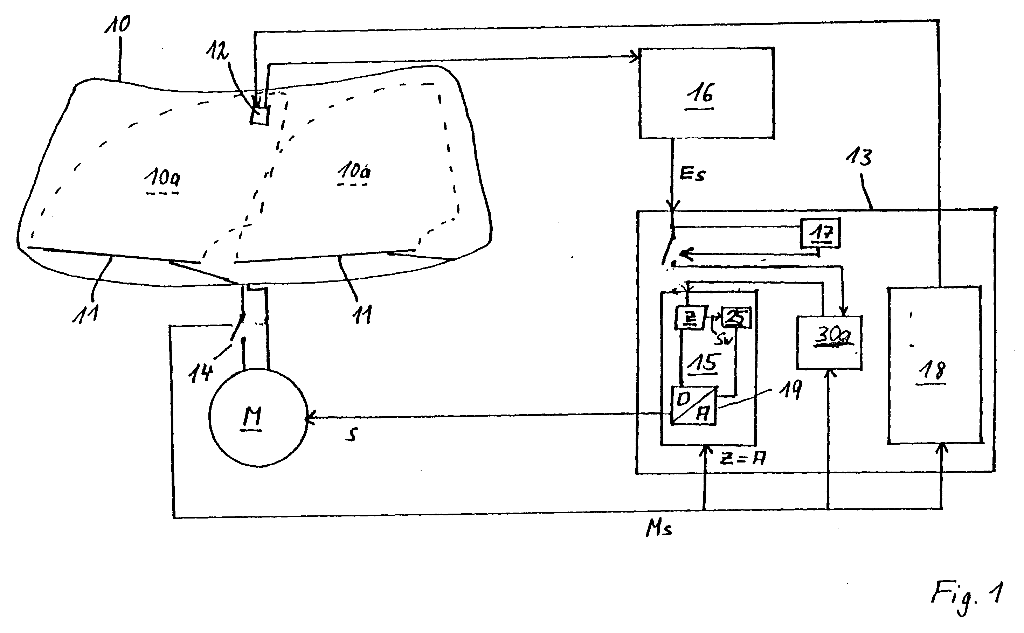

Gemäß Fig. 1 besitzt eine Einrichtung zur Steuerung einer Scheibenwischanlage einen Antriebsmotor M, der wenigstens einen Wischer, meist zwei Wischer 11 über einen Wischbereich 10a einer Scheibe führt. In dem Wischbereich 10a ist eine Sensorvorrichtung 12 angeordnet, wie sie aus dem DE-GM 93 09 837 bekannt ist. Insofern kann bezüglich dieser Sensorvorrichtung weitgehend auf diese Druckschrift verwiesen werden. Soweit erforderlich, wird jedoch auf die Einzelheiten der Sensorvorrichtung im folgenden eingegangen.

Die Sensorvorrichtung 12 wird während eines Wischvorgungs vom Wischer 11 im Wischbereich des Wischers zweimal überstrichen. Die Sensorvorrichtung wird von einem Belag oder einer Benetzung der Scheibe so beeinflußt, daß jede Beeinflussung ein Signal Es analog zur Tropfengröße oder -menge erzeugt. Mit dem Antriebsmotor M und der Sensorvorrichtung 12 ist eine Signalverarbeitungseinrichtung 13 gekoppelt, die die von der Sensorvorrichtung 12 erzeugten Signale in Steuersignale S für den Antriebsmotor M umformt. Die Einrichtung kann auch eine Schaltkontakteinrichtung aufweisen, die ggf. wenigstens einer bestimmten Stellung des Wischers während des Wischvorgangs zugeordnet sein kann. Meist handelt es sich bei der Schaltkontakteinrichtung 14 um den Motorendschalter des Antriebsmotors M, bei dessen Betätigung der Wischer 11 sich in seiner Parkstellung befindet.

Als Mittel zur Erkennung der Signale, die von der Sensorvorrichtung 12 während des Überstreichens durch den Wischer 11 erzeugt werden, ist der Zähler Z einer Zählanordnung 15 vorgesehen. Der Zähler zählt dabei sämtliche während eines Wischvorgangs von der Sensorvorrichtung 12 ermittelten Signale und vergleicht diese mit einem voreingestellten bestimmterr Wert. Ein Überschreiten dieses Wertes löst einen Wischvorgang aus. Der Auslösewert ist jedoch größer als die Anzahl der Signale, die von der Sensorvorrichtung 12 während des Überstreichens des Wischers erzeugt werden. Nach Auslösen des folgenden Wischvorgangs, spätestens aber nach wenigstens einem Wischzyklus, wird der Signalzentrierstufe Zähler Z an einen Ausgangswert zurückgestellt. Signal kann auch eine Schaltkontakteinrichtung 14 geben, sobald der Wischer z.B. in seiner Parkstellung ist.

Die Sensorvorrichtung selbst arbeitet optoelektronisch, wobei durch ein Zusammenspiel von Strahlungssendern und Strahlungsempfängern wenigstens zwei Meßstrecken gebildet werden, die wechselweise über einen Taktgeber angesteuert werden. Eine Auswerteeinrichtung 16 detektiert die getakteten Signale, wobei die auftretenden Signale über eine Zeitkonstante, wie in dem DE-GM 93 09 837 beschrieben, zu 0 ausgeregelt werden. Dadurch ist es möglich, selbst starke Fremdstrahlung so auszublenden, daß Signale Es entstehen, die lediglich vom Belag und der Benetzung der Scheibe 10 abhängig sind. Vorteilhaft ist die Fähigkeit der Sensorvorrichtung 12, Signale analog zur Tropfengröße und -menge zu erzeugen. Kleine Tröpfchen erzeugen kleine Signale, große Tropfen große Signale und bei Bewegung im Wind sogar mehrere Signale, so daß sich deutlich Qualität und Quantität der Benetzung erkennen läßt. Während im Stand der Technik ein Wischen erfolgt, sobald ein bestimmter Referenzwert unterschritten wird, kann hier innerhalb des verwertbaren Signalbereichs das Ansprechverhalten analog zum zeitlichen Ablauf einer erneuten Benetzung geregelt werden, während die Detektionsschwelle D z.B. nicht verändert wird. Eine Einstellanordnung stellt eine derart bemessene Strahlungsleistung der einzelnen Strahlungsquellen ein, daß bei unbenetztem sensoraktivem Bereich jede Meßstrecke einen Abschnitt des Detektionssignals erzeugt, dessen mittlerer Amplitudenwert gleich dem mittleren Amplitudenwert der den anderen Meßstrecken zugeordneten Abschnitten des Detektionssignals ist, und wobei eine Signalzentrierstufe das getaktete Detektionssignal hinsichtlich des Unterschieds zwischen den den einzelnen Meßstrecken zugeordneten Abschnitten zur Erzeugung eines Steuersignals filtert. Hierzu wird im einzelnen auf das DE-GM 93 09 837 verwiesen, das hiermit ausdrücklich auch zum Gegenstand der vorliegenden Erfindung gemacht wird.

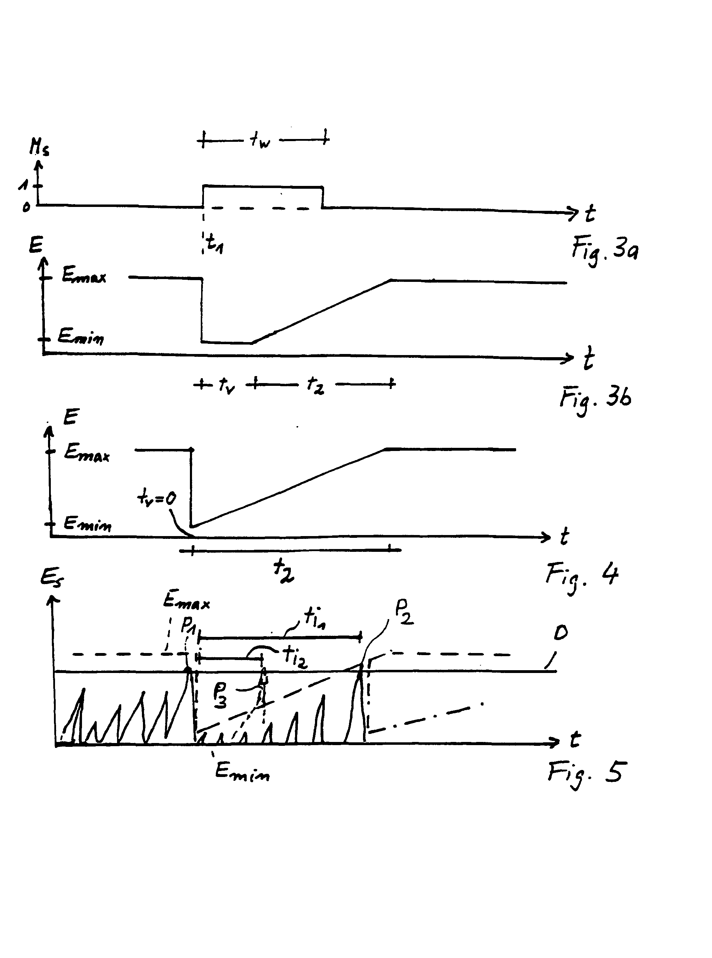

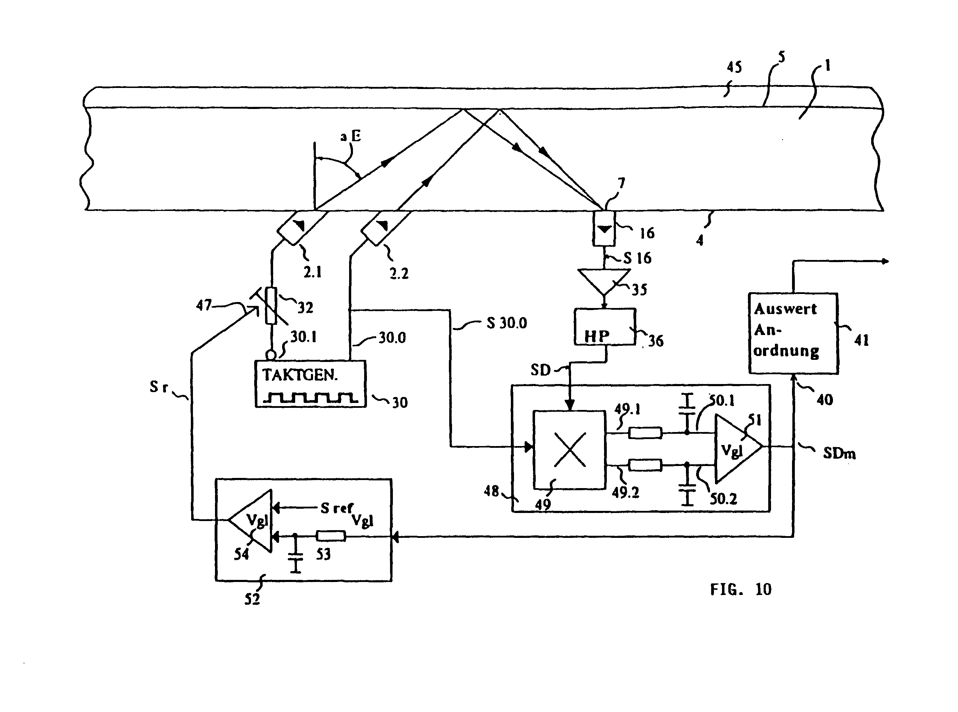

Bei der in Fig. 10 dargestellten Anordnung ist die Schalteranordnung zur Steuerung der beiden Strahlungsquellen 2.1 und 2.2 ein Taktgenerator 30 der an einem nicht invertierenden Ausgang 30.0 und an einem invertierenden Ausgang 30.1 abwechselnd einen Stromimpuls jeweils zur Anregung der Ausstrahlung der an den Ausgang angeschlossenen Strahlungsquelle für die Dauer des Stromimpulses erzeugt. Der eine Ausgang des Taktgenerators 30 enthält zur Einstellung des Stromwertes ein Stromstellglied 32, das durch ein Stellsignal Sr an seinem Stelleingang 47 verstellbar ist. Die Rückstrahlung dieser beiden Strahlungsquellen am Ankopplungsort des Strahlungsempfängers 16 wird von diesem in ein elektrisches Ausgangssignal S 16 gewandelt, das entsprechend zu der in Fig 3 dargestellten Anordnung über einen Verstärker 35 und einen Hoch- oder Bandpaß 36 als Detektionssignal SD an den Ausgang der Filterschaltung 36 gelangt An den Ausgang der Filterschaltung 36 ist eine Signalzentrierstufe 48 angeschlossen, die die Änderungen des Detektionssignales SD am Ausgang der Filterschaltung 36 einer Mittenspannung Uz aufprägt. Im dargestellten Ausführungsbeispiel enthält die Signalzentrierstufe 48 einen Synchrondemodulator 49 mit zwei Demodulatorausgängen 49.1 und 49.2, die je einer Strahlungsquelle zugeordnet sind. Die Zuordnung erfolgt über einen Steuertakt S 30.0 des Stromimpulsgenerators 30, der auch die Abstrahlung der Strahlungsquellen steuert. Den Demodulatorausgängen 49.1 und 49.2 sind im dargestellten Ausführungsbeispiel Demodulationswertspeicher 50.1 und 50.2 nachgeschaltet, die den mittleren Amplitudenwert der von dem Synchrondemodulator 49 abgetasteten, den beiden Strahlungsquellen zugeordneten Signalabschnitten des Demodulationssignals SD momentan speichern und auf diese Weise einen Hüllkurvendemodulator bilden. Aus den momentanen mittleren Amplitudenwerten der beiden Detektionswertspeicher wird in einem anschließenden Operationsverstärker 51 der Differenzwert gebildet und einem Mittenwert aufgeprägt. Dieses so gebildete geglättete Detektionssignal SD m, das gegenüber dem Detektionssignal SD am Ausgang der Filterschaltung 36 wesentlich von Störungen befreit ist, wird sowohl einer Auswertanordnung 41 als auch einer Regelschaltung 52 mit einer hohen Regelzeitkonstanten Tv zugeführt. Im dargestellten Ausführungsbeispiel enthält die Regelschaltung ein Zeitkonstantenglied 53 und einen Vergleicher 54, der aus dem Vergleich mit einem Referenzsignal Sref ein Stellsignal Sr für den Stelleingang 47 des Stromstellgliedes 32 derart erzeugt, daß die Strahlungsleistung der mit dem Stromstellglied geregelten Strhlungsquelle 2.1 so verändert wird, daß der Unterschied der Detektionsamplitudenwerte am Ausgang der Signalzentrierstufe 48 gegen Null geht. Die Regelgeschwindigkeit, d.h. die Regelzeitkonstante Tv der Regelschaltung 52 ist hierbei so bemessen, daß sie um ein wesentliches Vielfaches größer ist als die langsamsten noch zu erfassenden Änderungen eines Benetzungsvorganges. Die Auswertanordnung 41 kann eingangsseitig auch unmittelbar mit dem Ausgang der beiden Detektionswertspeicher 50.1 und 50.2 verbunden werden, insbesondere dann, wenn mittels der Auswertanordnung die Benetzung gemessen werden soll. Die Regelzeitkonstante ist um ein wesentliches Vielfaches größer ist als eine Schwingungsperiode des Schaltfolgesignales, das die dem Strahlungsempfänger zugeordneten Strahlungsquellen oder Gruppen von Strahlungsquellen schaltet. Dadurch werden langsamere oder bleibende Änderungen im sensoraktiven Bereich der Platte oder Wand, die nicht von der Benetzung verursacht sind oder die Benetzung nicht betreffen, beim Erkennen oder Messen der Benetzung nicht berücksichtigt und Einflüsse infolge von Alterung, Verschmutzung oder Temperaturunterschieden können leicht eliminiert werden, die bekannten Systemen Probleme bereiten.

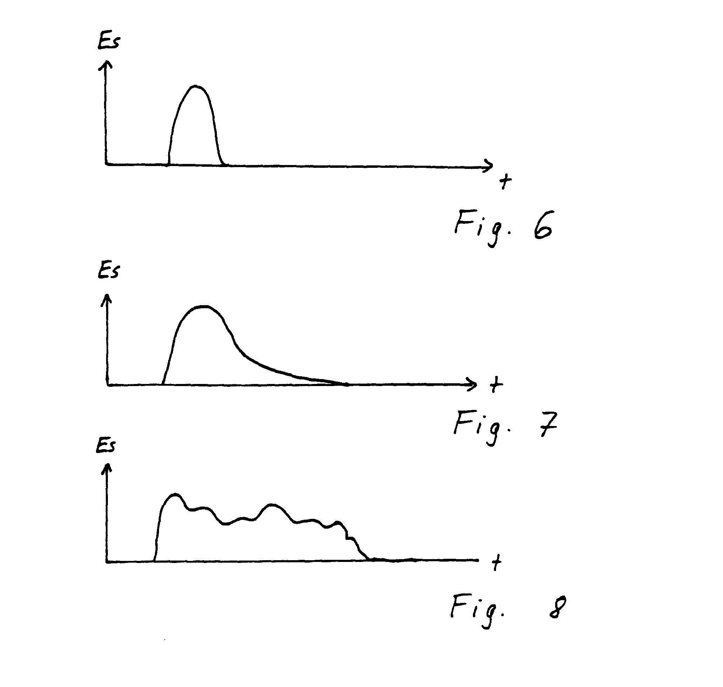

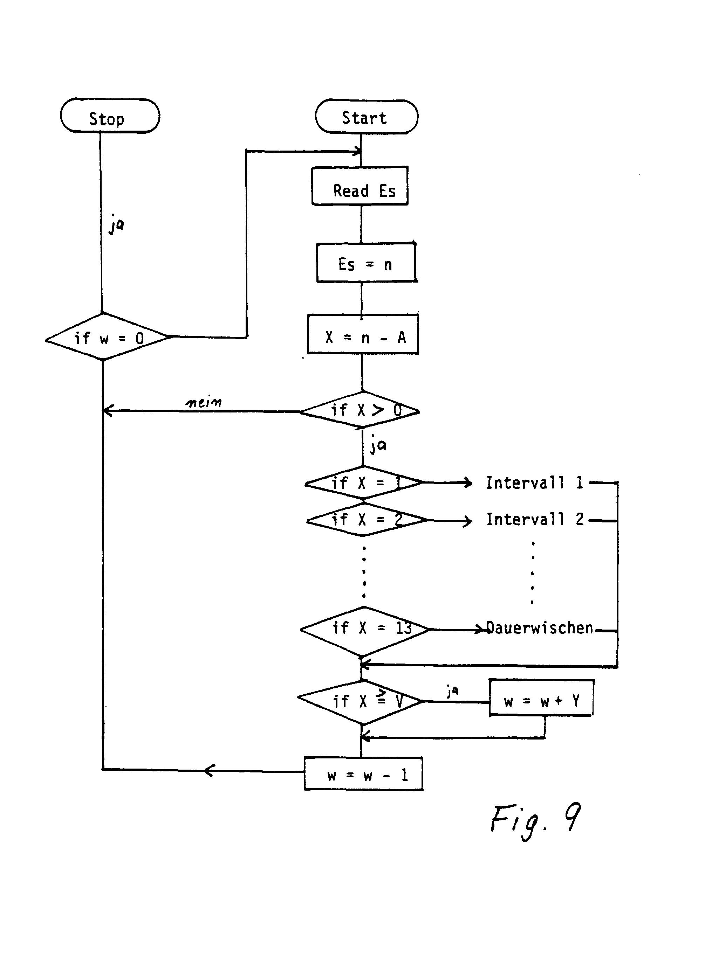

Die vom Zähler Z ermittelten Werte können dann unmittelbar einem Digital-Analog-Wandler 19 zugeführt werden, der daraus Steuersignale S für den Antriebsmotor M bildet. Allgemein kann gelten, daß je höher der Zählerstand im Durchschnitt oder bei Beginn eines Wischvorgangs ist, umso öfter gewischt wird. Problemlos können sämtliche Signale während eines Wischvorgangs ausgewertet werden. Durch das automatische Rücksetzen, entweder zeitabhängig, steuerspannungsabhängig oder in Abhängigkeit der Wischerstellung, werden auch einzeln auftretende Signale sicher ermittelt. Es wird dazu der ganzzahlige Abstand zwischen dem Ausgangswert A und dem Auslösewert bei dessen Überschreiten der Wischvorgang ausgelöst wird, gegenüber dem Wert erhöht, der der Anzahl des Überstreichens, also z.B. der Zahl 1 oder 2 entspricht. Das erste Signal kann dann z.B. einen Timer schalten, der den Ausgangswert A für einen bestimmten Zeitraum um 1 erhöht, wobei jedes weitere, über den Timer geführte, neu eintreffende Signal die Timerlaufzeit neu startet. Die eindeutige Detektionsmöglichkeit der Signale führt dazu, daß ein Einzelereignis, wie z.B. das Auftreffen eines Insekts gemäß Fig. 6 ein deutliches Einzelsignal ergibt, während bereits ein Tropfen und erst recht ein Tropfen im Wind gemäß den Fign. 7 und 8 längere bzw. mehrere Signale erzeugt, die den Zähler entsprechend hochzählen lassen, so daß der voreingestellte Auslösewert überschritten wird. Ein unerwartetes Auslösen und damit verbundene Schreckmomente des Fahrzeugführeres werden vermieden.

Einstellmittel 18 können zur Regelung des Ansprechverhaltens der Sensorvorrichtung 12 vorgesehen sein. Diese Einstellmittel 18 können auch unmittelbar an der Sensorvorrichtung angeordnet sein und verringern nach einer vorgegebenen Zeit tᵥ nach Beginn eines Wischvorgangs das Ansprechverhalten der Sensorvorrichtung in Abhängigkeit des Motorsignals Ms der Schaltkontakteinrichtung 14. Dies führt zu einer Verschiebung des Wertes, ab dem die vorhandenen Signale detektiert werden. So können innerhalb der einzeln anstehenden Signale Regeiverläufe gebildet werden, die bereits den Tropfen entsprechenden Signale zu Auswertezwecken verändern. Innerhalb verwertbarer Signale wird die Erfassungsschwelle verschoben. Dies führt dazu, daß bei verringertem Ansprechverhalten große Tropfen aufgrund der Höhe und/oder Dauer des Signals zu einem Eingangssignal führen, während kleinere Tröpfchen keine Wirkung zeigen.

Dies kann entweder dadurch erfolgen, daß das Ansprechverhalten und die Empfindlichkeit der Sensorvorrichtung durch Regelung der Empfindlichkeit verringert wird, wodurch sich die Signale aufgrund einer geringeren Verstärkung mit einer geringeren Amplitude abzeichnen, oder daß die Regelzeitkonstante geregelt wird, so daß sich die Signale zeitlich kürzer abzeichnen. Alternativ können Signale mit einem unterschiedlichen Teilerverhältnis erfaßt werden. Allen Regelungen ist gemeinsam, daß die Einstellmittel 18 zur Regelung des Ansprechverhaltens der Einrichtung das Ansprechverhalten nach einer vorgegebenen Zeit tᵥ, die ggf. auch Null sein kann und nach der der Wischer 11 seine Parkstellung verlassen hat oder nach der das Steuersignal dem Wischer übermittelt worden ist, von einem Ausgangszustand mit empfindlichem Ansprechverhalten auf einen vorbestimmten Zwischenzustand mit unempfindlichem Ansprechverhalten regeln und anschließend innerhalb einer bestimmten Zeit t₂ auf einen Endzustand zurückregeln, der vorzugsweise dem Ausgangszustand entspricht. Insofern kann auf ein Signal des Endschalters ggf. auch verzichtet werden.

Eine Ausregelung der ermittelten Signale im Sensor über die Regelzeitkonstante erfolgt grundsätzlich so, daß der Differenzwert des Signals gegen Null geht, wobei bei einer langen Regelzeitkonstante der Differenzwert langsamer gegen Null geht als bei einer kurzen Regelzeitkonstante. Die Einstellmittel 18 regeln während eines Wischvorgangs die Regelzeitkonstante kürzer als zu einem Zeitpunkt, während dem keine Benetzung vorhanden ist. Allein schon dadurch ist es möglich, Veränderungen, die durch von selbst abtrocknende Schlieren nach dem Überwischen auftreten, aus den Meßsignalen auszublenden. Die Regelzeitkonstante wird von der Signalverarbeitungseinrichtung 13 in Abhängigkeit des Signals des Motorendschalters und eines Zeitraums von ca. 10-30 Sekunden geregelt. Die Empfindlichkeit wird dadurch so verschoben, daß nach dem Zurückregein nur große Tropfen erkannt werden. Als Nebeneffekt wird ein durch das Überstreichen der Sensorvorrichtung 12 durch den Wischer 11 erzeugtes Signal auswertbar, weil bei viel Regen auch ein großer Überwischimpuls erzeugt wird.

Alternativ oder ergänzend können auch Stellmittel a vorgesehen sein, die in Abhängigkeit eines Signals der Schaltkontakteinrichtung 14 ein Teilerverhältnis innerhalb einer vorbestimmten Zeit t₂ bis auf 1:1 verringern, so daß zunächst mehrere Signale Es zu einem einzigen Signal führen, bis die Stellmittel 30 a den Teiler auf 1 gesetzt haben. Dies führt dazu, daß entweder aufgrund eines Regens oder aufgrund größerer Tropfen, die aufgrund ihrer Bewegung im Wind mehrere Signale erzeugen, trotz des anfänglich hohen Teilers ein Signal aus mehreren entsteht oder ein Signal entsteht, sobald der Teiler nach einer bestimmten Zeit soweit verringert ist, daß ein einzelnes Signal weitergeleitet wird.

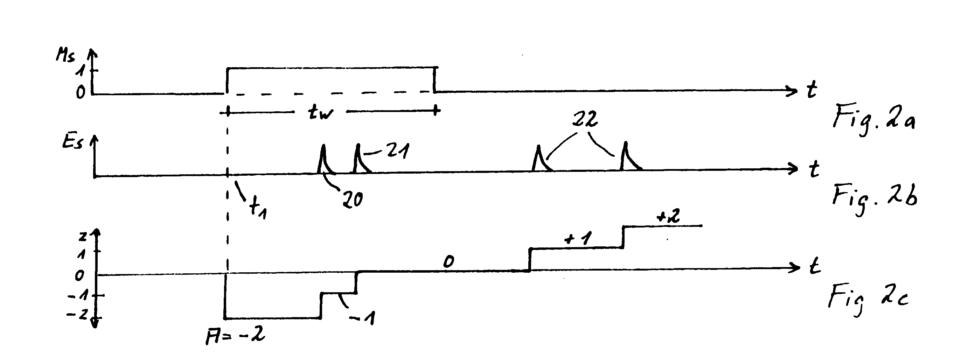

Im folgenden werden die ermittelten Ergebnisse anhand der Fign. 2a bis 5 näher erläutert. Fig. 2a zeigt zunächst das Motorsignal Ms, das sich über die Zeit ändert. Sobald der Scheibenwischermotor zum Zeitpunkt t₁ eingeschaltet wird, ergibt sich ein Motorsignal Ms, das über den Wischzeitraum t_{w} vorhanden ist. Das Auftreten dieses Motorsignals sorgt dafür, daß der Wert des Zählers Z auf den Ausgangswert A gestellt wird, der gemäß Fig. 2c minus 2 ist. Die Zahl minus 2 wird dabei dann gewählt, weil der Wischer 11 die Sensorvorrichtung 12 im Wischbereich 10a zweimal überstreicht. In Fig. 2b sind ebenfalls über die Zeit aufgetretene Signale aufgezeichnet. Die ersten beiden Signale 20 und 21 werden dabei dadurch hervorgerufen, daß der Wischer die Sensorvorrichtung überstreicht. Jedes Signal führt dabei zu einem Puls als Eingangssignal Es in die Signalverarbeitungseinrichtung 13. Allein durch diese beiden Signale zählt die Zählanordnung 15 bis zum Wert 0 herauf, der dem voreingestellten bestimmten Wert entspricht. Die beiden weiter auftretenden Signale 22 erhöhen dann diesen Wert weiter, so daß in Abhängigkeit des Wertes des Zählers Z der Digital-Analog-Wandler 19 nun Steuersignale S für den Antriebsmotor erzeugt, die wiederum zu einem Einschalten des Wischers führen, was eine Rückstellung des Zählers auf den Ausgangswert minus 2 zur Folge hat.

Diese Zählanordnung 15 kann gemeinsam mit einer Empfindlichkeitsregelung eingesetzt werden, wie sie sich aus den Fign. 3a bis 5 ergibt. Die Beispiele zeigen eine Regelung der Empfindlichkeit, also eine Verringerung der Amplitude. Eine Veränderung der Regelzeitkonstante bzw. des Teilerverhältnisses wirkt sich jedoch ähnlich aus. In Fig. 3a ist das Motorsignal aufgetragen, das zum Zeitpunkt t₁ über die Einstellmittel 18 zur Regelung des Ansprechverhaltens die Empfindlichkeit E gemäß Fig. 3b von einem Maximalwert Eₘₐₓ auf einen Minimalwert Eₘᵢₙ geregelt. Dieser Minimalwert wird gemäß Fig. 3b zunächst über eine vorgegebene Zeit tᵥ aufrechterhalten. In einem an den Wischvorgang anschließenden Zeitraum t₂, der in der Praxis z.B. 10-30 Sekunden betragen kann, wird die Empfindlichkeit E allmählich wieder auf den Wert Eₘₐₓ überführt.

Gemäß Fig. 4 besteht die Möglichkeit, bei tᵥ=0 das Ansprechverhalten bereits während des Wischvorgangs wieder allmählich höher werden zu lassen. Während des gesamten Zeitraums werden die kontinuierlich ermittelten Signale einem Speicher zugeführt, der bei Überschreiten eines Auslösewert einen Wischvorgang auslöst. Dadurch werden bei starkem Regen während des gesamten Wischvorgangs Signale ermittelt, die ein feinfühliges Steuern der Scheibenwischanlage ermöglichen. Um ggf. ein rasches Reagieren der Scheibenwischersteuerung z.B. bei der Vorbeifahrt an einem Lkw oder einer Ausfahrt aus einem Tunnel zu erzielen, besteht ergänzend die Möglichkeit kurz nach dem Wischvorgang auftretende Signale unmittelbar zur Steuerung der Scheibenwischanlage in den Speicher der Steuereinheit 15 zu laden.

Das Ergebnis ergibt sich aus Fig. 5. Wie zuvor beschrieben, wird gemäß der gestrichelten Linie die Empfindlichkeit, also das Ansprechverhalten der gesamten Sensorvorrichtung geregelt verändert. Signale führen zu einer Reaktion der Steuerung, sobald die Detektionsschwelle überschritten wird, wobei auch mehrere Signale in einem Speicher gespeichert werden können, um einen weichen, gleichmäßigen Wischablauf zu erzielen. Zu Beginn setzt auf der linken Seite von Fig. 5 ein Regen ein, der beim Peak P1 ein Wischen auslöst, da die Detektionsschwelle überschritten wird. Der Fahrzeugbenutzer hätte seinen Wischer ebenfalls jetzt aufgrund der Sichtbehinderung betätigt. Mit tᵥ=0 wird die Empfindlichkeit zu Beginn des Wischvorgangs, also zum Zeitpunkt t₁ vom Ausgangszustand auf einen Zwischenzustand heruntergeregelt. Als Folge davon erscheinen die folgenden Tropfen in der Amplitude kleiner. Handelt es sich um einen starken Regen, so würden sie dennoch sofort wieder die Detektionsschwelle D erreichen. Die Empfindlichkeit steigt allmählich wieder und würde einen Endzustand maximaler Empfindlichkeit Eₘₐₓ wieder erreichen, der dem Ausgangszustand entspricht, wenn nicht ein Tropfen als Peak P2 die Detektionsschwelle überschreiten würde. Sofort fällt die Empfindlichkeit durch den erneut ausgelösten Wischvorgang auf den Zwischenzustand minimaler Empfindlichkeit Eₘᵢₙ. Die Zeit zwischen den Peaks oder zwischen dem Verringern der Empfindlichkeit registriert die Steuerung als nächstes Wischintervall mit der Intervallzeit ti₁. Den während eines Regens veränderlichen Bedingungen würde dadurch Rechnung getragen, daß, wenn der zweite Peak bereits früher die Detektionsschwelle erreicht hätte, z.B. der gestrichelt dargestellte Peak P₃, sich die Intervallzeit ti₂ ergeben hätte.

Die Zählanordnung 15 kann eine erste Speichereinheit sein, die bei Überschreiten eines vorgegebenen Wertes V und/oder nach einer vorgegebenen Anzahl von ggf. innerhalb einer bestimmten Zeit aufeinanderfolgenden Wischvorgängen über Signalübertragungsmittel weitere Signale Sw an einen Hintergrundspeicher 25 überträgt, dessen Inhalt ebenfalls die Erzeugung von Steuersignalen ggf. auch nach Entladen der Speichereinheit beeinflußt.

Der schematische Arbeitsablauf einer derartigen Vorrichtung ergibt sich aus Fig. 9. Sobald Signale Es von der Sensorvorrichtung ermittelt werden, wird die Zählanordnung als Speichereinkeit durch START gestartet. Die Eingangssignale werden eingelesen und ergeben die ganzzahlige Zahl n. Nach Abzug des Ausgangswertes A, der z.B die vom Überstreichen hervorgerufenen Signale widerspiegelt, ergibt sich die tatsächliche während eines Wischvorgangs eingegangene Anzahl X von Signalen. Ist dieser Wert X kleiner oder gleich 0 kann dies grundsätzlich zur Beendigung des Wischens oder überhaupt nicht zum Start des Antriebsmotors führen. Ist X größer 0 wird je nach der Anzahl der kruzfristig ggf. während eines Wischvorgangs auftretenden Signale entweder die intervallschaltung des Scheibenwischers mit einem von der Anzahl der Signale abhängigen Zeitintervall ausgelöst oder bei einer großen Anzahl von Signalen z.B. über 13 wird sofort, z.B. bei einer Vorbeifahrt an einem Lkw ein Dauerwischen ausgelöst.

Gleichzeitig wird überprüft, ob der Wert X größer als ein vorgegebener Schwellwert V ist, wobei hier ergänzend oder alternativ auch die Anzahl der unmittelbar aufeinanderfolgenden Wischvorgänge herangezogen werden kann. Ist der Wert V überschritten oder erreicht wird der Wert des Hintergrundspeichers 25 erhöht, wobei vorzugsweise ein Wert gewählt ist, der kleiner ist als der Gesamtinhalt des Speichers, um ein flexibles Verhalten dieses Hintergrundspeichers zu erzielen. Z.B. kann der Wert um 2 erhöht werden. In einem anschließenden Schritt wird dieser Wert dann z.B. um 1 verringert, sobald ein Signal von der Schaltkontakteinrichtung gegeben wird.

Abschließend wird geprüft, ob nicht nur X gleich 0 ist, sondern auch der Wert des Hintergrundspeichers wieder 0 ist. Erst wenn beide Bedingungen erfüllt sind, stoppt der Antriebsmotor.

Durch diesen Hintergrundspeicher 25 ist eine allmähliche Nachführung der Wischbewegungen möglich, da auch in der Natur ein Regen nicht schlagartig einsetzt und aufhört, so daß ein geregeltes Nachwischen nach einem Regen erzielt wird. Andererseits kann jedoch die im Vordergrund agierende Speichereinheit, hier die Zählanordnung blitzartig auf Spritzwasser reagieren.

Bei Erreichen des Auslösewerts des Zählers (Z), also z.B. seines Maximalwertes, erfährt die Steuereinheit, daß eine entsprechende Benetzung vorhanden ist, die einen weiteren Wischvorgang erforderlich macht. Wird dieser Auslösewert jedoch erreicht, bevor der vorausgehende Wischvorgang beendet ist, ist eine derartige Benetzung vorhanden, daß der Wischer im Dauerbetrieb bleiben muß. Insofern führt dieses vorzeitige erneute Erreichen des Auslösewerte zu einer derartigen z.B. Verlängerung des Steuersignals (S), daß der Antriebsmotor (M) im Dauerbetrieb bleibt. Dazu kann z.B. die Zeit in der die Steuerspannung anliegt entsprechend beeinflußt werden.

## Patentansprüche

1. Einrichtung zur Steuerung einer Scheibenwischanlage mit
- einem Antriebsmotor (M) für wenigstens einen, einen Wischbereich (10a) einer Scheibe (10) überstreichenden Wischer (11),
- einer im Wischbereich (10a) angeordneten Sensorvorrichtung (12), die während eines Wischvorgangs vom Wischer (11) zweimal überstrichen wird und Signale vermittelt, die vom Belag oder der Benetzung der Scheibe (10) beeinflußt sind,
- einer mit Antriebsmotor (M) und Sensorvorrichtung (12) gekoppelten Signalverarbeitungseinrichtung (13), die die von der Sensorvorrichtung (12) vermittelten Signale (Es) in Steuersignale (S) für den Antriebsmotor (M) umformt,
- einer Auswertevorrichtung (16), die die Signale der Sensorvorrichtung (12) detektiert und der Signalverarbeitungseinrichtung (13) zuführt,
- einer Zählanordnung (15), deren Zähler (Z) die während eines Wischvorgangs von der Sensorvorrichtung (12) vermittelten Signale (Es) zählt, wobei ein Überschreiten eines bestimmten Wertes des Zählers (Z) einen weiteren Wischvorgang auslöst, wobei der Zähler (Z) selbstätig auf einen Ausgangswert rückstellbar ist,
**dadurch gekennzeichnet, dass**
- der Zähler (Z) selbst das einzige Mittel zur Erkennung der vom Überstreichen des Wischers hervorgerufenen einzelnen Signale ist,
- der Auslösewert größer ist als die Anzahl der Signale, die von der Sensorvorrichtung (12) allein dadurch erzeugt werden, daß der Wischer (11) selbst die Sensorvorrichtung (12) überstreicht, wobei der ganzzahlige Abstand zwischen dem Ausgangswert und dem bestimmten Wert größer zwei ist,
- die optoelektronische Sensorvorrichtung (12) mehrere Strahlungssender und wenigstens einen Strahlungsempfänger oder wenigstens einen Strahlungssender und mehrere Strahlungsempfänger aufweist, die wenigstens zwei Meßstrecken bilden, die über einen Taktgeber wechselweise angesteuert werden, und daß die Auswertevorrichtung (16) die einzelnen getakteten Signale detektiert und der Signalverarbeitungseinrichtung (13) zuführt, wobei eine Einstellanordnung (32) zur Einstellung einer derart bemessenen Strahlungsleistung der einzelnen Strahlungsquellen vorgesehen ist, daß bei unbenetztem sensoraktivem Bereich jede Meßstrecke einen Abschnitt des Detektionssignals erzeugt, dessen mittlerer Amplitudenwert gleich dem mittleren Amplitudenwert der den anderen Meßstrecken zugeordneten Abschnitte des Detektionssignals ist, und wobei eine Signalzentrierstufe (48) das getaktete Detektionssignal hinsichtlich des Unterschieds zwischen den den einzelnen Meßstrecken zugeordneten Abschnitten zur Erzeugung eines Steuersignals filtert.

2. Einrichtung nach Anspruch 1, **dadurch gekennzeichnet, daß** bei Erreichen des bestimmten Wertes des Zählers (Z) ein weiterer Wischvorgang gestartet wird und daß, wenn der bestimmte Wert vor Ende des vorausgehenden Wischvorgangs erreicht wird, das Steuersignal (S) so erzeugt wird, daß der Antriebsmotor (M) im Dauerbetrieb bleibt.

3. Einrichtung nach Anspruch 1, **dadurch gekennzeichnet, daß** ein Motorendschalter des Antriebsmotors (M), bei dessen Betätigung der Wischer (11) in seiner Parkstellung ist, den Zähler (Z) zurückstellt.

4. Einrichtung nach Anspruch 1, **dadurch gekennzeichnet, daß** der ganzzahlige Abstand zwischen Ausgangswert (A) und dem Auslösewert, dessen Überschreiten den Wischvorgang auslöst, um wenigstens 1 größer ist als die Anzahl der Signale, die der Wischer (11) beim Überstreichen der Sensorvorrichtung (12) erzeugt.

5. Einrichtung nach Anspruch 4, **dadurch gekennzeichnet, daß** ein erstes Signal einen Timer (17) schaltet, der den Ausgangswert für einen voreinstellbaren Zeitraum um wenigstens 1 erhöht, wobei jedes neu eintreffende Signal ebenfalls über den Timer geführt wird und die Timerlaufzeit neu startet.

6. Einrichtung nach Anspruch 1, **dadurch gekennzeichnet, daß** die Sensorvorrichtung (12) Signale analog zur Tropfengröße und - anzahl erzeugt und daß Einstellmittel (18) zur Regelung des Ansprechverhaltens der Einrichtung vorgesehen sind, die das Ansprechverhalten nach einer vorgegebenen Zeit (tᵥ), nach der der Wischer (11) gestartet ist, von einem Ausgangszustand mit empfindlichem Ansprechverhalten auf einen vorbestimmten Zwischenzustand mit unempfindlichem Ansprechverhalten regeln und anschließend innerhalb einer bestimmten Zeit (t₂) auf einen Endzustand mit empfindlichen Ansprechverhalten zurückregeln, der vorzugsweise dem Ausgangszustand entspricht.

7. Einrichtung nach Anspruch 6, **dadurch gekennzeichnet, daß** die Einstellmittel (18) zur Regelung des Ansprechverhaltens das Ansprechverhalten vor Erreichen des Ausgangszustands wieder auf den Zwischenzustand verringern, wenn die Signale (Es) eine Detektionsschwelle überschreiten, und daß die Zeit zwischen dem ersten und dem zweiten Erreichen des Zwischenzustands bei tᵥ=0 die Intervallzeit (ti) des Wischers ist.

8. Einrichtung nach Anspruch 6, **dadurch gekennzeichnet, daß** die Einstellmittel (18) zur Regelung des Ansprechverhaltens das Ansprechverhalten und die Empfindlichkeit der Sensorvorrichtung durch Verringerung der Verstärkung der Signale regeln und/oder durch Verringerung der Regelzeitkonstante regeln, innerhalb der auftretende Signale (Es) ausgeregelt werden.

9. Einrichtung nach Anspruch 6, **dadurch gekennzeichnet, daß** die Einstellmittel (18) zur Regelung des Ansprechverhaltens Stellmittel (30) umfassen, die ein Teilerverhältnis innerhalb der bestimmten Zeit (t₂) bis auf 1:1 verringern, so daß zunächst mehrere Signale (Es) zu einem einzigen Signal führen, bis die Stellmittel (30) den Teiler auf 1 gesetzt haben.

10. Einrichtung nach Anspruch 1, **dadurch gekennzeichnet, daß** die Zählanordnung (15) eine erste Speichereinheit ist und daß bei Überschreiten eines vorgegebenen weiteren Wertes (V) und/oder nach einer vorgegebenen Anzahl von ggf. innerhalb einer bestimmten Zeiteinheit aufeinanderfolgenden Wischvorgängen Signalubertragungsmittel weitere Signale (Sw) an einen Hintergrundspeicher (25) übertragen, dessen Inhalt ebenfalls die Erzeugung von Steuersignalen ggf. auch nach Entladen der Speichereinheit beeinflußt.

11. Einrichtung nach Anspruch 10, **dadurch gekennzeichnet, daß**, sobald der weitere Wert oder die Anzahl von Wischvorgängen überschritten ist, die Signalübertragungsmittel einen begrenzten Signalwert (Y) in den Hintergrundspeicher (25) übertragen, der kleiner ist als sein maximaler Speicherinhalt.

12. Einrichtung nach Anspruch 10, **dadurch gekennzeichnet, daß** der Wert (w) des digitalen Hintergrundspeichers (25) mit jedem erfolgtem Wischvorgang um einen vorgegebenen dritten Wert bis zur vollständigen Entladung verringert wird.

## Claims

1. Apparatus for controlling a windscreen wiper system, having
- a drive motor (M) for at least one wiper (11), which sweeps over a wiping area (10a) of a windscreen (10),
- a sensor device (12), which is disposed in the wiping area (10a), and over which the wiper (11) sweeps twice during a wiping operation, said sensor device providing signals which are influenced by the external surface or the wetting of the windscreen (10),
- a signal processing device (13), which is coupled to the drive motor (M) and sensor device (12), and which converts the signals (Es), provided by the sensor device (12), into control signals (S) for the drive motor (M),
- an evaluating device (16), which detects the signals of the sensor device (12) and supplies such to the signal processing device (13),
- a counting arrangement (15), the counter (Z) of which counts the signals (Es) provided by the sensor device (12) during a wiping operation, wherein exceeding of a specific value of the counter (Z) trips a further wiping operation, and wherein the counter (Z) can be reset automatically to a starting value,
**characterised in that**
- the counter (Z) itself is the sole means for identifying the individual signals caused by the sweeping of the wiper,
- the trip value is greater than the number of signals which are generated by the sensor device (12) alone, so that the wiper (11) itself sweeps over the sensor device (12), the integral spacing between the starting value and the specific value being greater than two,
- the optoelectronic sensor device (12) has a plurality of radiation emitters and at least one radiation receiver or at least one radiation emitter and a plurality of radiation receivers, which form at least two measurement paths which are alternately triggered via a timing generator, and **in that** the evaluation device (16) detects the individual timed signals and supplies them to the signal processing device (13), an adjusting arrangement (32) being provided for adjusting a radiation output, thus dimensioned, of the individual radiation sources, **in that**, when the sensor-active area is not wetted, each measurement path generates one portion of the detection signal, the mean amplitude value of which is equal to the mean amplitude value of the portions of the detection signal associated with the other measurement paths, and a signal centering stage (48) filtering the timed detection signal with respect to the difference between the portions associated with the individual measurement paths to generate a control signal.

2. Apparatus according to claim 1, **characterised in that**, when the specific value of the counter (Z) is reached, a further wiping operation is started, and **in that**, if the specific value is reached before the end of the preceding wiping operation, the control signal (S) is generated such that the drive motor (M) remains in continuous operation.

3. Apparatus according to claim 1, **characterised in that** a limit switch of the drive motor (M), upon the actuation of which the wiper (11) is in its parking position, resets the counter (Z).

4. Apparatus according to claim 1, **characterised in that** the integral spacing between the starting value (A) and the trip value, the exceeding of which trips the wiping operation, is greater by at least 1 than the number of signals which the wiper (11) generates on sweeping over the sensor device (12)

5. Apparatus according to claim 4, **characterised in that** a first signal switches a timer (17), which raises the starting value by at least 1 for a preadjustable period of. time, each newly arriving signal being likewise carried via the timer and restarting the timer running time.

6. Apparatus according to claim 1, **characterised in that** the sensor device (12) generates signals analogous to the droplet size and number, and **in that** adjusting means (18) are provided for regulating the response behaviour of the apparatus, which means regulate the response behaviour after a prescribed time (tᵥ), after which the wiper (11) is started, from a starting state with a sensitive response behaviour to a predetermined intermediate state with an insensitive response behaviour, and subsequently regulate it back to a final state with a sensitive response behaviour within a specific time (t₂), which behaviour preferably corresponds to the starting state.

7. Apparatus according to claim 6, **characterised in that** the adjusting means (18) for regulating the response behaviour reduce the response behaviour again to the intermediate state before the starting state is reached if the signals (Es) exceed a detection threshold, and **in that** the time between when the intermediate state is first reached and is reached for a second time, at tᵥ = 0, is the time interval (ti) of the wiper.

8. Apparatus according to claim 6, **characterised in that** the adjusting means (18) for regulating the response behaviour regulate the response behaviour and the sensitivity of the sensor device by reducing the amplification of the signals and/or regulate such by reducing the regulating time constant, within which arriving signals (Es) are corrected.

9. Apparatus according to claim 6, **characterised in that** the adjusting means (18) for regulating the response behaviour include control means (30), which reduce a divider ratio within the specific time (t₂) down to 1:1, so that initially a plurality of signals (Es) lead to a single signal until the control means (30) have set the divider to 1.

10. Apparatus according to claim 1, **characterised in that** the counting arrangement (15) is a first memory unit, and **in that**, if a prescribed further value (V) is exceeded and/or after a prescribed number of wiping operations, which possibly succeed one another within a specific unit of time, signal transmitting means transmit further signals (Sw) to a background memory (25), the contents of which likewise influence the generation of control signals, possibly also after unloading of the memory unit.

11. Apparatus according to claim 10, **characterised in that**, as soon as the further value or the number of wiping operations is exceeded, the signal transmitting means transmit a limited signal value (Y) to the background memory (25), which value is smaller than its maximum memory contents.

12. Apparatus according to claim 10, **characterised in that** the value (w) of the digital background memory (25) is reduced, upon each wiping operation performed, by a prescribed third value until it is completely unloaded.

## Revendications

1. Dispositif de commande d'un système d'essuie-glace comprenant
- un moteur d'entraînement (M) pour entraîner au moins un essuie-glace (11) passant par-dessus une zone d'essuyage (10a) d'un pare-brise (10),
- un dispositif de capteurs (12) disposé dans la zone d'essuyage (10a), qui est masqué deux fois par l'essuie-glace (11) lors de son action d'essuie-glace et qui produit des signaux influencés par le recouvrement ou la mouillure du pare-brise (10),
- un dispositif de traitement de signal (13) relié au moteur d'entraînement (M) et au dispositif de capteurs (12), et transformant le signal (Es) produit par le dispositif de capteurs (12) en un signal de pilotage (S) pour le moteur d'entraînement (M),
- un dispositif d'exploitation (16) qui détecte les signaux du dispositif de capteurs (12) et les transmet au dispositif de traitement de signal (13),
- un dispositif de comptage (15) dont le compteur (Z) compte les signaux (Es) transmis pendant un essuyage par le dispositif de capteurs (12), le dépassement d'une valeur déterminée du compteur (Z) déclenchant un autre essuyage, le compteur (Z)pouvant être automatiquement replacé sur une valeur initiale,
**caractérisé en ce que**
- le compteur (Z) lui-même est le seul moyen de reconnaissance des différents signaux provoqués par le passage de l'essuie-glace,
- la valeur de déclenchement est supérieure au nombre de signaux qui sont produits par le dispositif de capteurs (12) du seul fait que l'essuie-glace lui-même passe sur le dispositif de capteurs (12), l'écart entier entre la valeur initiale et la valeur déterminée étant supérieur à deux,
- le dispositif de capteurs optoélectronique (12) comporte plusieurs émetteurs de rayonnement et au moins un récepteur de rayonnement ou au moins un émetteur de rayonnement et plusieurs récepteurs de rayonnement, qui forment au moins deux parcours de mesure qui sont commandés alternativement par un générateur de rythme,
et **en ce que** le dispositif d'exploitation (16) détecte les différents signaux cadencés et les transmet au dispositif de traitement de signal (13), un dispositif de réglage (32) étant prévu pour le réglage d'une puissance de rayonnement des différentes sources de rayonnement, telle que lorsque la zone de détection active n'est pas mouillée, chaque parcours de mesure produit une partie du signal de détection dont la valeur d'amplitude moyenne est égale à la valeur d'amplitude moyenne des parties du signal de détection associées aux autres parcours de mesure, et un étage de centrage de signaux (48) filtrant le signal de détection cadencé en ce qui conceme la différence entre les parties associées aux différents parcours de mesure pour produire un signal de commande.

2. Dispositif selon la revendication 1, **caractérisé en ce qu'**une action d'essuyage supplémentaire est démarrée lorsque la valeur prédéterminée du compteur (Z) est atteinte, et **en ce que**, lorsque cette valeur prédéterminée est atteinte avant la fin de l'action d'essuyage en cours, le signal de pilotage (S) ainsi produit maintient le moteur d'entraînement (M) en fonctionnement.

3. Dispositif selon la revendication 1, **caractérisé en ce qu'**un interrupteur en extrémité du moteur d'entraînement (M), dont le déclenchement indique que l'essuie-glace (11) est dans sa position de rangement, réinitialise le compteur (Z).

4. Dispositif selon la revendication 1, **caractérisé en ce que** l'écart entier entre la valeur initiale (A) et la valeur de déclenchement, dont le dépassement déclenche l'essuyage, est supérieur d'au moins 1 au nombre de signaux que l'essuie-glace (11) produit lorsqu'il passe sur le dispositif de capteurs (12)
dispositif de capteurs optoélectronique (12) comprend plusieurs émetteurs de rayonnement et au moins un récepteur de rayonnement, ou au moins un émetteur de rayonnement et plusieurs récepteurs de rayonnement, définissant au moins deux voies de mesure qui sont pilotées par une horloge ; et **en ce qu'**un dispositif d'exploitation (16) détecte les signaux cadencés et pilote un dispositif de prétraitement de signal (13), dispositif dans lequel il est prévu un dispositif de réglage (32) pour régler la puissance de rayonnement mesurée de chacune des sources de rayonnement de telle sorte que chaque voie de mesure, en relation avec une zone de détection non couverte, produit une partie du signal de détection dont la valeur d'amplitude moyenne est identique à la valeur d'amplitude moyenne des parties du signal de détection correspondant aux autres voies de mesure ; dispositif dans lequel un circuit de filtrage filtre les signaux de détection cadencés en fonction des différences entre les parties correspondantes de chacune des voies de mesure pour produire un signal de pilotage.

5. Dispositif selon la revendication 5, **caractérisé en ce qu'**un premier signal déclenche un compteur de délai (17) augmentant d'au moins 1 la valeur initiale pour une période prédéterminable, et **en ce que** chaque nouveau signal entrant est également amené au compteur de délai et déclenche une nouvelle période du compteur de délai.

6. Dispositif selon la revendication 1, **caractérisé en ce que** le dispositif de capteurs (12) produit des signaux proportionnels à la taille et au compte des gouttes, **en ce que** sont prévus des moyens de réglage (18) pour régler le mode de réponse du dispositif qui règlent ce mode de réponse, après un temps prédéterminé (tᵥ) une fois l'essuie-glace (11) parti, d'une condition initiale avec un mode de réponse sensible vers une condition intermédiaire prédéterminée avec un mode de réponse non sensible, et inversent finalement le réglage à l'intérieur d'un délai prédéterminé (t₂) vers une condition finale avec un mode de réponse sensible qui, avantageusement, correspond à la condition initiale.

7. Dispositif selon la revendication 6, **caractérisé en ce que** les moyens de réglage (18) prévus pour le réglage du mode de réponse réduisent à nouveau ce mode de réponse à la condition intermédiaire avant l'avènement de la condition finale lorsque les signaux (Es) dépassent un seuil de détection, et **en ce que** le délai entre le premier et le second avènement de l'état intermédiaire correspond à l'intervalle de temps (ti) de l'essuie-glace, tᵥ étant nul.

8. Dispositif selon la revendication 6, **caractérisé en ce que** les moyens de réglage (18) prévus pour le réglage du mode de réponse règlent, pendant l'arrivée des signaux (Es), le mode de réponse et la sensibilité du dispositif de capteurs par diminution de l'amplification du signal et/ou par diminution de la constante de temps de réglage.

9. Dispositif selon la revendication 6, **caractérisé en ce que** les moyens de réglage (18) prévus pour le réglage du mode de réponse comprennent des moyens d'établissement (30) qui diminuent jusqu'à 1:1 le comportement d'un diviseur pendant le délai prédéterminé (t₂) de telle sorte que plusieurs signaux (Es) conduisent d'abord en un signal unique, jusqu'à ce que les moyens d'établissement (30) rétablissent le diviseur à la valeur 1.

10. Dispositif selon la revendication 1, **caractérisé en ce que** le circuit de comptage (15) consiste en une première unité de mémoire, et **en ce que** des moyens de transposition de signaux transposent des signaux supplémentaires (Sw) à une mémoire de base arrière (25) lors d'un dépassement d'une valeur prédéterminée (V) et/ou après l'obtention d'un décompte prédéterminé d'actions d'essuyage successives, le cas échéant à l'intérieur d'une unité de temps prédéterminée, mémoire de base dont le contenu peut également influencer la génération du signal de pilotage et le cas échéant également le déchargement de l'unité de mémorisation.

11. Dispositif selon la revendication 10, **caractérisé en ce que** dès qu'une valeur supplémentaire ou un décompte d'actions d'essuyage est dépassé, les moyens de transposition de signaux transposent une valeur réduite de signal (Y) dans la mémoire de base arrière (25) qui est plus petite que sa capacité maximale de mémorisation.

12. Dispositif selon la revendication 10, **caractérisé en ce que** la valeur (w) de la mémoire de base arrière digitale (25) est diminuée par une troisième valeur prédéterminée après chaque action d'essuyage accomplie jusqu'à déchargement complet.
